(19) Europäisches Patentamt
European Patent Office
Office européen des brevets

(11) **EP 1 606 577 B1**

(12) **EUROPÄISCHE PATENTSCHRIFT**

(45) Veröffentlichungstag und Bekanntmachung des Hinweises auf die Patenterteilung:
**15.10.2008 Patentblatt 2008/42**

(21) Anmeldenummer: 04702668.7

(22) Anmeldetag: **16.01.2004**

(51) Int Cl.:
*G01B 11/00* (2006.01)     *G01B 11/24* (2006.01)
*G01B 11/30* (2006.01)

(86) Internationale Anmeldenummer:
**PCT/EP2004/000295**

(87) Internationale Veröffentlichungsnummer:
**WO 2004/085957 (07.10.2004 Gazette 2004/41)**

(54) **VERFAHREN ZUR BERÜHRUNGSLOSEN DYNAMISCHEN ERFASSUNG DES PROFILS EINES FESTKÖRPERS**

METHOD FOR CONTACTLESSLY AND DYNAMICALLY DETECTING THE PROFILE OF A SOLID BODY

PROCEDE DE DETECTION DYNAMIQUE SANS CONTACT DU PROFIL D UN S    OLIDE

(84) Benannte Vertragsstaaten:
**AT BE BG CH CY CZ DE DK EE ES FI FR GB GR HU IE IT LI LU MC NL PT RO SE SI SK TR**

(30) Priorität: **25.03.2003 DE 10313191**

(43) Veröffentlichungstag der Anmeldung:
**21.12.2005 Patentblatt 2005/51**

(73) Patentinhaber: **Gutehoffnungshütte Radsatz GmbH**
**46145 Oberhausen (DE)**

(72) Erfinder:
• **HOFFMANN, Manfred**
**34277 Fuldabrück (DE)**
• **WALTER, Michael, J.**
**46562 Voerde (DE)**
• **HOFFMANN, Dieter**
**46499 Hamminkeln (DE)**
• **BRINKMANN, Andreas**
**46539 Dinslaken (DE)**

(74) Vertreter: **Patentanwälte**
**Dr. Solf & Zapf**
**Schlossbleiche 20**
**D-42103 Wuppertal (DE)**

(56) Entgegenhaltungen:
WO-A-83/00738          RU-C- 2 147 729
US-A- 4 932 784        US-A- 5 247 338
US-A- 5 636 026

## Beschreibung

Die vorliegende Erfindung betrifft ein berührungsloses Verfahren zur dynamischen Erfassung des Profils eines Festkörpers, insbesondere zum Zweck einer Bestimmung von an dem Festkörper aufgetretenen Verschleiß.

Zur Verschleißermittlung werden häufig sogenannte Modellprüfstände (z.B. nach Amsler, Laffon-Eichinger u.a.) eingesetzt, auf denen Probekörper der Materialien, die in einer bei einem bestimmten anwendungsfall auftretenden Reibpaarung hinsichtlich ihrer tribologischen Eigenschaften getestet werden. Die Übertragung der auf solche Weise ermittelten Kenngrößen auf den konkreten Anwendungsfall, beispielsweise auf Reibkörper sehr viel größerer Dimension als die der Testkörper, stößt jedoch auf die Schwierigkeit, daß die Tests nur Orientierungswerte liefern können, da die Einflußgrößen auf den Verschleiß ein komplexes Bedingungsgefüge darstellen, das auf einem Modellprüfstand nie genau den realen Gegebenheiten entspricht. Daher sind tribologische Untersuchungen am realen Objekt für wichtige Anwendungsfälle unumgänglich, stoßen aber oft auf das Problem, daß, ein Bauteil, dessen Verschleiß untersucht werden soll, nach einer gewissen Betriebsdauer ausgebaut und dann z.B. hinsichtlich des aufgetretenen Verschleißes unter Ermittlung des Oberflächenprofils untersucht werden muß, was in der Regel mit einem erheblichen Aufwand verbunden ist.

Profilerfassungen an Festkörpern, d.h. Erstellungen von Profilogrammen der Oberfläche, können bekanntermaßen mittels taktiler Verfahren, beispielsweise unter Einsatz eines Tastschnittgerätes, durchgeführt werden, wobei es sich bei Letzterem um ein auf der Berührung einer Tastspitze mit dem Festkörper beruhendes Verfahren handelt, bei dem der Meßbereich unter einem Millimeter liegt und bei dem beispielsweise im Zentimeterbereich keine Meßwerte gewonnen werden können. Die Meßzeit liegt dabei bei mehreren Sekunden pro Meßpunkt und das Verfahren ist für eine rauhe Meßumgebung nachteiligerweise nicht geeignet.

Zur statischen Erfassung von Festkörperprofilen sind auch verschiedene berührungslos arbeitende optische Verfahren bekannt. Derartige Verfahren und die dazugehörigen Vorrichtungen werden, wie beispielsweise in der Monografie von Bernd Breuckmann "Bildverarbeitung und optische Meßtechnik", München: Franzis', 1993, Kapitel 6 beschrieben ist, auch unter dem Begriff "Topometrische 3D-Meßtechnik" subsumiert. Als eines der topometrischen Verfahren wird dabei die Laser-Triangulation beschrieben, wobei unter Triangulation ein von Snellius 1615 erstmals zur Erdvermessung entwickeltes Meßverfahren zu verstehen ist, bei dem eine zu ermittelnde Meßgröße indirekt aus anderen Meßgrößen unter Anwendung trigonometrischer Beziehungen bestimmt wird.

Bei der Laser-Triangulation wird mittels eines Lasers ein Lichtpunkt auf ein Meßobjekt projeziert. Das vom Objekt reflektierte Licht, insbesondere Streulicht, wird auf einem Lichtaufnahmeelement, wie einem positionsempfindlichen Detektor, abgebildet. Derartige Detektoren werden im englischen Sprachgebrauch auch als PSD - "position sensitive devices" bezeichnet. Aus der Geometrie des optischen Aufbaus sowie dem Winkel zwischen Beleuchtungs- und Beobachtungsrichtung bestimmt man durch Triangulation die Lage, insbesondere die Höhenlage, des betrachteten Objektpunktes. Laser-Triangulations-Methoden gestatten heute die Durchführung von berührungslosen Messungen im Entfernungsbereich bis zu einigen Metern mit Tiefenauflösungen bis in den $\mu$m-Bereich.

Eine Erweiterung der Laser-Triangulation stellt ein bekanntes, ebenfalls in der genannten Monografie beschriebenes Verfahren dar, bei dem der Laser-Lichtstrahl zu einem linienförmigen Lichtband, einem sogenannten Lichtschnitt, aufgeweitet wird. Zur Erfassung des reflektierten Lichtes kann dabei ein flächenförmiger Detektor eingesetzt werden, wie beispielsweise eine Videokamera. Die Auswertung erfolgt wiederum unter Zugrundelegung der Triangulation. Charakteristisch für dieses Verfahren ist ein Meßbereich der Profilhöhe von 1 mm bis zu 1 m bei einer Auflösung von etwa 1 bis zu 50 Tausendstel dieses Bereiches. In der genannten Monografie wird eine grundsätzliche Eignung des Lichtschnitt-Verfahrens für den Einsatz bei kontinuierlich bewegten Objekten postuliert, zu den Einsatzmöglichkeiten und Grenzen sind jedoch keine Angaben enthalten. Ein Verfahren zur dynamischen, d.h. Echtzeit-Erfassung des Profils eines bewegten Festkörpers stößt jedoch in der Praxis auf das Problem, daß durch die Bewegung der zu vermessenden Oberfläche Verzerrungen auftreten, die eine Vorgehensweise unter Einsatz der klassischen Triangulationsverfahren unmöglich machen, da solchermaßen keine der Realität entsprechenden Meßwerte gewonnen werden können.

Aus der US 5636026 ist ein berührungsloses Verfahren zur dynamischen Erfassung des Profils eines Festkörpers bekannt.

Der vorliegenden Erfindung liegt die Aufgabe zugrunde, ein berührungsloses Verfahren zur dynamischen Erfassung des Profils eines Festkörpers, der eingangs beschriebenen Art zu schaffen, das kurze Meßzeiten gestattet, einen mindestens drei Größenordnungen überdeckenden Meßbereich, wie Zehntelmillimeter, Millimeter und Zentimeter, umfaßt, eine hohe Meßgenauigkeit gewährleistet und das unter rauhen Betriebsbedingungen insbesondere zur Verschleißbestimmung von Bauteilen einsetzbar ist.

Die Aufgabe wird durch die Merkmale des Anspruchs 1 gelöst.

Bei dem Festkörper kann es sich dabei um einen eine translatorische eine rotierende oder bevorzugt um einen eine rollende Bewegung ausführenden rotationssymmetrischen Körper, insbesondere um ein Fahrzeugrad, handeln. Das erfindungsgemäße Verfahren stellt damit eine äußerst vorteilhafte Möglichkeit dar, Profile eines Rades während der Vorbeifahrt zu bestimmen und daraus Rückschlüsse über den Verschleiß zu ziehen.

Zusätzlich zu der Verknüpfung mit den entsprechend der Bewegungsgeschwindigkeit des Festkörpers bestimmten Korrekturwerten, die vorteilhafterweise eine nicht durch die Geschwindigkeit "verwischte" Profilbestimmung gestatten, können insbesondere in dem als bevorzugt genannten Fall für eine verzerrungsfreie Ermittlung des Profilogramms auch die Meßwerte des Profils unter Verknüpfung mit entsprechend dem Bereich der Oberfläche des Festkörpers bestimmten Korrekturwerten gewonnen werden.

Im Sinne einer vollständigen Profilerfassung ist es von Vorteil, wenn mehrere Profilogramme als Teilprofilogramme unter Einsatz von mindestens drei, auf verschiedene Seiten der Oberfläche des Festkörpers liegende Bereiche Lichtbänder projizierenden Lasereinrichtungen und diesen zugeordneten Abbildungseinrichtungen bestimmt werden, die Teilprofilogramme in der Datenverarbeitungsanlage gespeichert werden und daraus ein Gesamtprofilogramm gewonnen wird. Bei einem in der Grundgestalt im wesentlichen zylindrischen oder ringförmigen Festkörper, wie einem Fahrzeugrad, können die mindestens drei Bereiche, auf die die Lichtbänder projiziert werden, dabei bevorzugt auf den beiden Deckflächen und auf der Mantelfläche des Zylinders oder Ringes liegen. Das Profilogramm, die Teilprofilogramme und/oder das Gesamtprofilogramm können dann mit jeweils mit einem oder mehreren Bezugsprofilogrammen verglichen und die jeweiligen Abweichungen von dem jeweiligen Bezugsprofilogramm festgestellt werden, was ein Maß für den aufgetretenen Verschleiß darstellt bzw. ein Maß dafür, ob der aufgetretene Verschleiß noch in einem tolerierbaren Bereich liegt. Unter Zuhilfenahme korrelativer Verknüpfungen zwischen der aufgetretenen Beanspruchungsdauer des Festkörpers und dem festgestellten Verschleiß kann in diesem Zusammenhang auch eine extrapolierende Aussage darüber getroffen werden, wie lange eine weitere Beanspruchungsdauer noch unbedenklich bzw. wann eine erneute Prüfung notwendig erscheint.

Des weiteren ist es von Vorteil, wenn das Profilogramm, die Teilprofilogramme, das Gesamtprofilogramm, das jeweilige Bezugsprofilogramm und/oder die jeweiligen Abweichungen auf eine feste, langzeitlich unveränderliche geometrische Basisgröße, wie einen nichtverschleißenden Radkranzinnenumfang, bezogen werden. Auf diese Weise kann beispielsweise die Verschleißfläche als eine Abwicklung dargestellt werden, auf der das Höhenprofil gegenüber der Basisgröße durch geeignete Darstellungsmittel abgebildet wird. Z.B. können das Profilogramm, die Teilprofilogramme, das Gesamtprofilogramm, das jeweilige Bezugsprofilogramm und/oder die jeweiligen Abweichungen in einer Anzeigevorrichtung, wie einem Display, visualisiert werden.

Die Basisgröße kann dabei mit Vorteil aus mindestens drei Meßwerten ermittelt wird, die ebenfalls durch berührungslose dynamische Messungen am bewegten Festkörper ermittelt werden, welche in der gleichen Art vorgenommen werden wie die Erfassung des Profilogramms bzw. die Erfassung der Teilprofilogramme. Hierzu besteht entweder die Möglichkeit, daß die Messungen am bewegten Festkörper in vorgegebenen Zeitintervallen zu mindestens drei Zeitpunkten mittels eines einzigen zu einem linienförmigen Lichtband aufgeweiteten Lichtstrahles oder daß die Messungen gleichzeitig mittels mindestens dreier, jeweils zu einem linienförmigen Lichtband aufgeweiteter Lichtstrahlen bei vorgegebenen Abstand der Bereiche der Oberfläche des Festkörpers, auf die die Lichtbänder projiziert werden, erfolgen.

Als Lichtaufnahmeelemente können mit Vorteil digitalisierte Signale liefernde Vorrichtungen, wie eine triggergesteuerte CCD-Kameras oder positionsempfindliche Detektoren (position sensitive device), wie Fotodiodenfelder, eingesetzt werden. Im ersten Fall ist dabei zu beachten, daß das Lichtaufnahmeelement empfindlich gegenüber der Lichtintensität ist, während es im zweiten Fall der Lichtmenge adäquate Signale liefert.

Was die erfindungsgemäß eingesetzte Lasereinrichtung betrifft, so haben sich folgende Charakteristika als besonders vorteilhaft erwiesen:

- unter dem Aspekt einer hohen Reproduzierbarkeit der Ergebnisse und einer hohen Meßgenauigkeit: Wellenlänge des erzeugten Lichtbandes im Bereich von 400 nm bis 1000 nm, insbesondere im Bereich von 650 bis 700 nm;

- ebenfalls unter diesem Aspekt: Leistung der Lasereinrichtung im Bereich von 0,5 bis 50 mW;

- unter dem Aspekt einer hohen Arbeitssicherheit (Laserklasse 2 nach DIN EN 60825-1:2001-11): Wellenlänge des Lichtbandes im sichtbaren Bereich und Grenzwert der zugänglichen Strahlung (GZS) der Lasereinrichtung geringer als 1 mW - hierbei ist zu beachten daß bei einer Laserleistung, die höher liegt als 1 mW, durch geeignete Maßnahmen der Grenzwert der zugänglichen Strahlung auf den geforderten Wert abgesenkt werden kann;

- unter dem Aspekt der Aufwandsminimierung für das Verfahren (Kosten): Einsatz einer cw- (continous-wave-) Festkörperdiode, beispielsweise aus einem Halbleitermaterial, wie GaAs, AlGaAs, InGaP, GaAsSb, InP, PbSnTe o.ä., bestehend, vorzugsweise einer VLD (visible laser diode), ähnlich wie sie in einem Laserpointer zum Einsatz kommt - ein sichtbares Lichtband erleichtert zudem die Justierung der Lasereinrichtung relativ zum zu vermessenden Festkörper;

Was die Meßbedingungen des erfindungsgemäßen Verfahrens betrifft, so haben sich folgende Charakteristika als besonders vorteilhaft bzw. optimal für eine Profilometrie zum Zweck der Verschleißprüfung erwiesen, wobei für das jeweils ermittelte Profilogramm, die Teilprofilogramme und das Gesamtprofilogramm eine Auflösung von weniger als 2,0 mm, inbesondere von weniger als 0,5 mm, erzielt werden kann.

- Breite des Lichtbandes: im Bereich von 0,3 mm bis 6,5 mm, insbesondere im Bereich von 0,8 mm bis 2,2 mm - durch Divergenz tritt mit gegebenenfalls gewollt zunehmendem mittleren Arbeitsabstand (Meßabstand) eine vergrößerte Breite des Lichtbandes auf, die aber die Meßgenauigkeit verringert;

- Länge des Lichtbandes: im Bereich von 50 mm bis 750 mm, insbesondere im Bereich von 200 mm bis 400 mm - entsprechend der Geometrie des zu vermessenden Bereiches der Oberfläche des Festkörpers;

- Triangulationswinkel: im Bereich von 15° bis 40°, insbesondere im Bereich von 20° mm bis 30°, ein vergrößerter Winkel erhöht die Meßgenauigkeit aber auch die Gefahr von inhomogener Ausleuchtung der Oberfläche des Festkörpers und dem Auftreten von Abschattungen;

- Basisabstand zwischen der Abbildungseinrichtung, insbesondere dem Mittelpunkt einer fokussierenden Linse der Abbildungseinrichtung, und der optischen Achse Lasereinrichtung im Bereich von 30 mm bis 450 mm, insbesondere im Bereich von 60 mm bis 270 mm.

- mittlerer Arbeitsabstand der Lasereinrichtung und/oder der Abbildungseinrichtung von dem Bereich der Oberfläche des Festkörpers, auf die das Lichtband projiziert wird: im Bereich von 20 mm bis 650 mm, insbesondere im Bereich von 150 mm bis 350 mm;

- Geschwindigkeit einer gegebenenfalls translatorischen Bewegung des Festkörpers: kleiner als 3,5 m/s, vorzugsweise kleiner als 1,5 m/s;

- Winkelgeschwindigkeit einer gegebenenfalls rotierenden Bewegung des Festkörpers: kleiner als 15 s$^{-1}$, vorzugsweise kleiner als 6 s$^{-1}$ und vorzugsweise konstant;

- Frequenz, mit der das von der Oberfläche des Festkörpers reflektierte Licht mittels des Lichtaufnahmeelementes erfaßt wird: im Bereich von 25 Hz bis 100 kHz, vorzugsweise im Bereich von 1 kHz bis 10 kHz.

Was die Frequenz betrifft, so muß diese auf die Bewegungsgeschwindigkeit des Festkörpers abgestimmt sein - eine höhere Frequenz verringert den Einfluß der Geschwindigkeit des Festkörpers auf die Verzerrung der Signale des Lichtaufnahmeelementes. Zur Bestimmung der entsprechend der Bewegungsgeschwindigkeit ermittelten Korrekturwerte, bei denen es sich insbesondere um der Natur der Meßwerte des Profilogramms entsprechende vektorielle, der Bewegungsgeschwindigkeit proportionale Faktoren und/oder Summanden handeln kann, kann daher mit Vorteil eine korrelative Verknüpfung der Bewegungsgeschwindigkeit mit der Frequenz der Erfassung des reflektierten Lichtes erfolgen. Für die angegebenen Bereiche der Geschwindigkeit der Bewegung des Festkörpers sind dabei vorteilhafterweise keine Nichtlinearitäten zu beachten.

Die entsprechend dem Bereich der Oberfläche des Festkörpers bestimmten Korrekturwerte können insbesondere der Natur der Meßwerte des Profils entsprechende vektorielle, in Abhängigkeit von einem Radius des rotationssymmetrischen Körpers bestimmte Faktoren und/oder Summanden sein, wobei es sich bei dem genannten Radius um die gleiche langzeitlich unveränderliche geometrische Basisgröße handeln kann, die als Bezugsgröße zur Ermittlung der Profilogramme dient.

Weitere vorteilhafte Ausführungen der Erfindung sind in den Unteransprüchen und in der nachfolgenden detaillierten Beschreibung enthalten.

Anhand eines durch die beiliegende Zeichnung veranschaulichten Ausführungsbeispiels wird die Erfindung näher erläutert. Dabei zeigen

Fig. 1      in einer schematisierten Seitenansicht, eine Prinzipdarstellung zur Veranschaulichung des erfindungsgemäßen Verfahrens,

Fig. 2      in einer schematisierten perspektivische Ansicht, eine weitere prinzipielle Darstellung zur Veranschaulichung des erfindungsgemäßen Verfahrens,

Fig. 3      eine perspektivische Ansicht eines Verschleißprüfstandes für Räder eines Schienenfahrzeugs, wie Eisenbahnräder, wobei das erfindungsgemäße Verfahren Anwendung findet,

Fig. 4          eine Fig. 3 entsprechende Einzelheit, aus einem hinsichtlich der Bewegungsrichtung von vom auf die Außenseite eines Rades gewählten Blickwinkel,

Fig. 5          eine Fig. 3 entsprechende Einzelheit, jedoch aus einem hinsichtlich der Bewegungsrichtung von hinten auf die Innenseite eines Rades gewählten Blickwinkel,

Fig. 6          eine schematisierte Darstellung zur Verfahrensweise bei der Ermittlung einer geometrischen Basisgröße, auf die eine erfindungsgemäß ermitteltes Profilogramm bezogen werden kann,

Fig. 7 und 8     Darstellungen von erfindungsgemäß ermittelten Profilogrammen.

In den verschiedenen Figuren der Zeichnung sind gleiche Teile stets auch mit den gleichen Bezugzeichen versehen, so daß sie in der Regel auch jeweils nur einmal beschrieben werden.

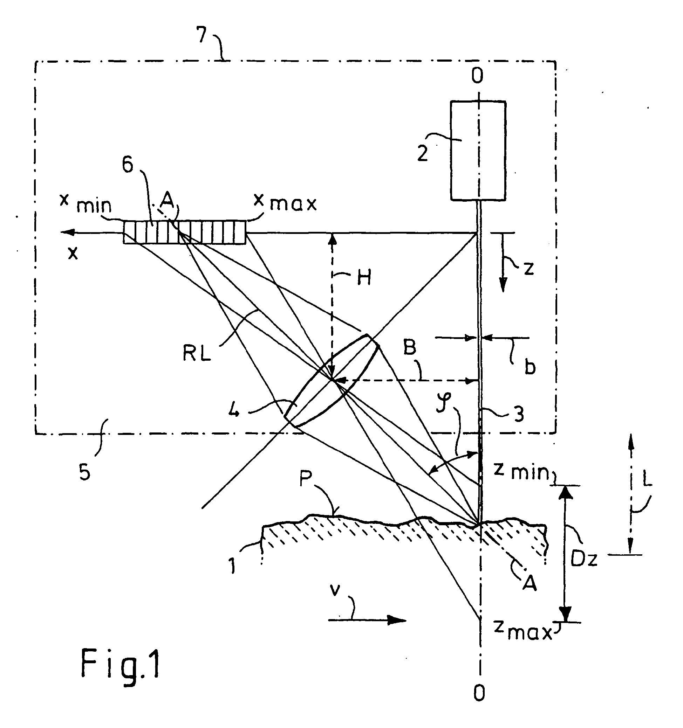

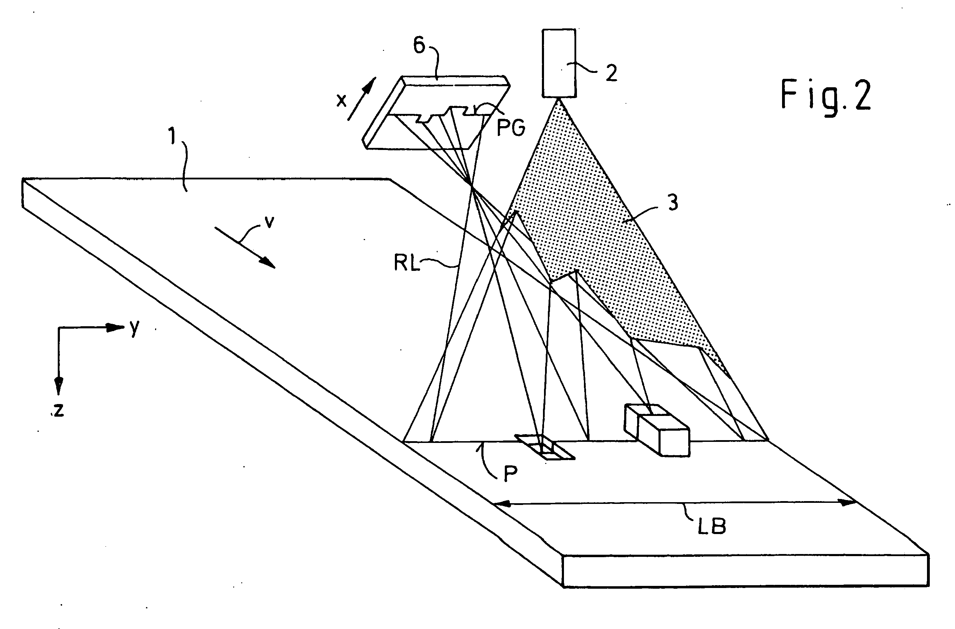

Wie zunächst Fig. 1 in hinsichtlich des Meßobjektes, eines mit der Geschwindigkeit v bewegten Festkörpers 1, in eindimensionaler Darstellung zeigt, wird entsprechend dem erfindungsgemäßen Verfahren ein von einer Lasereinrichtung 2 ausgehender Lichtstrahl mittels einer nicht dargestellten Optik so fokussiert, daß in einem Meßbereich Dz, der sich aus der Differenz eines maximal meßbaren Wertes $z_{max}$ und eines minimal meßbaren Wertes $z_{min}$ der Tiefe bzw. der Profilhöhe z ergibt, die Breite b des Strahls in einem vorgegebenen Bereich liegt. Der Lichtstrahl ist dabei zu einem Lichtband 3 aufgeweitet, wie dies in zweidimensionaler Darstellung Fig. 2 zeigt.

Am Auftreffort $z_A$ des Lichtbandes auf die Oberfläche des Festkörpers 1 bildet sich durch diffuse Lichtstreuung (Reflektiertes Licht R) ein Meßfleck, der auch aus Richtungen wahrgenommen werden kann, die von der durch die optische Achse O-O der Lasereinrichtung 2 bestimmten Einfallsrichtung abweichen.

Wird nun der Meßfleck unter dem Triangulationswinkel φ von einer entsprechenden fokussierenden Linse 4 einer Abbildungseinrichtung 5 auf ein flächenförmiges Lichtaufnahmeelement 6 abgebildet, so stellt sich je nach der Entfernung des Auftreffortes $z_A$ zwischen einem Minimalwert $x_{min}$ und einem Maximalwert $x_{max}$ eine Lage $x_A$ des Bildflecks auf dem Lichtaufnahmeelement 6 ein.

Die Geometrie des Aufbaus der für das erfindungsgemäße Verfahren verwendeten Einrichtung wird dabei neben dem fest eingestellten Triangulationswinkel φ durch einen festen Basisabstand B der optischen Achse A-A der fokussierenden Optik 4 der Abbildungseinrichtung 5 zur Position der Lasereinrichtung 2 - festgelegt durch deren optische Achse O-O - bestimmt.

Unter Anwendung trigonometrischer Beziehungen kann aus der gemessenen Bildfleckposition $x_A$ die Entfernung des Auftreffortes $z_A$, d.h. der Abstand der Oberfläche des Festkörper 1 von der Lasereinrichtung 2 gemäß der Gleichung

$$z_A = H / (1 - B / x_A) \tag{1}$$

bestimmt werden, wobei H ein Abstand der fokussierenden Linse 4 der Abbildungseinrichtung 5 zu deren Lichtaufnahmeelement 6 ist, wie dies Fig. 1 veranschaulicht.

Die relative Meßgenauigkeit $dz_A / z_A$ ergibt sich dabei zu

$$dz_A / z_A = 1 / (1 - x_A / B) * dx_A / x_A \tag{2},$$

wobei die relative Auflösung $dx_A / x_A$ der Bildfleckposition von der Geschwindigkeit v des Festkörpers in Relation zu einer Frequenz f, mit der das reflektierte Licht RL vom Bildaufnahmeelement 6 aufgenommen wird, sowie vom Signalrauschen und der Art des Lichtaufnahmeelementes 6 abhängt. Die Größe $dz_A$ in Gleichung (2) stellt dabei einen Absolutwert der Meßgenauigkeit dar.

Zur Erhöhung der Auflösung werden die endgültigen Meßwerte $z_B$ des Profils (in Fig. 1 und 2 mit P bezeichnet) unter Verknüpfung der Werte $z_A$ mit entsprechend der Bewegungsgeschwindigkeit v des Festkörpers 1 bestimmten Korrekturwerten Kv gewonnen, bei denen es sich insbesondere um vektorielle, der Bewegungsgeschwindigkeit v proportionale Faktoren und/oder Summanden handelt. Dabei erfolgt zur Bestimmung der entsprechend der Bewegungsgeschwindigkeit v ermittelten Korrekturwerte Kv eine korrelative Verknüpfung der Bewegungsgeschwindigkeit v mit der Frequenz f der Erfassung des reflektierten Lichtes R.

Durch eine Veränderung der vorstehend beschriebenen Geometrie, insbesondere des Basisabstands B, des Triangulationswinkels φ und/oder eines mittleren Arbeitsabstands (in Fig. 1 durch die Länge L veranschaulicht) der Abbildungseinrichtung 5 bzw. der Lasereinrichtung 2 von dem Bereich der Oberfläche des Festkörpers 1, auf die das Lichtband 3 projiziert wird, kann vorteilhafterweise der Meßbereich Dz und damit zusammenhängend die Meßgenauigkeit $dz_A / z_A$ einfach durch die passende Wahl der geometrischen Größen des Aufbaus frei eingestellt werden. Die einzelnen Einrichtungen brauchen dabei nicht notwendigerweise, wie in Fig. 1 dargestellt, durch ein gemeinsames Gehäuse 7 umfaßt sein. Eine Vergrößerung des Meßbereichs Dz bewirkt dabei eine Verringerung der Meßgenauigkeit und umgekehrt.

In der dargestellten Ausführung wurde als Lichtaufnahmeelement 6 eine SONY-Kamera HCC 400 eingesetzt. Da die Auflösung von der Größe des Meßbereiches, also vom Meßbereich Dz, abhängig ist, bedeutet dies für die Dimensionierung einer Vorrichtung zur Durchführung des erfindungsgemäßen Verfahrens, daß die Anzahl der erfassenden Kameraköpfe unmittelbar von der erforderlichen oder gewählten Auflösung ist.

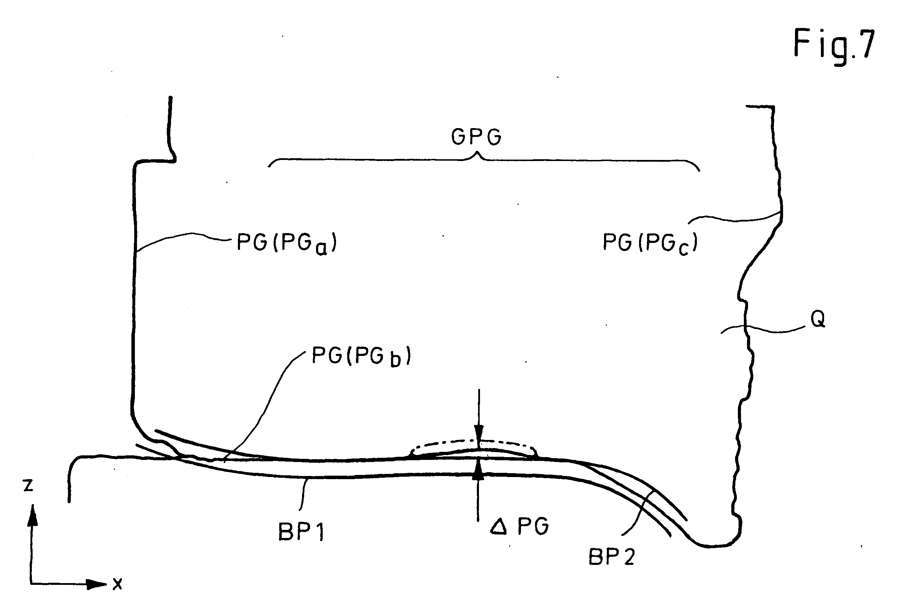

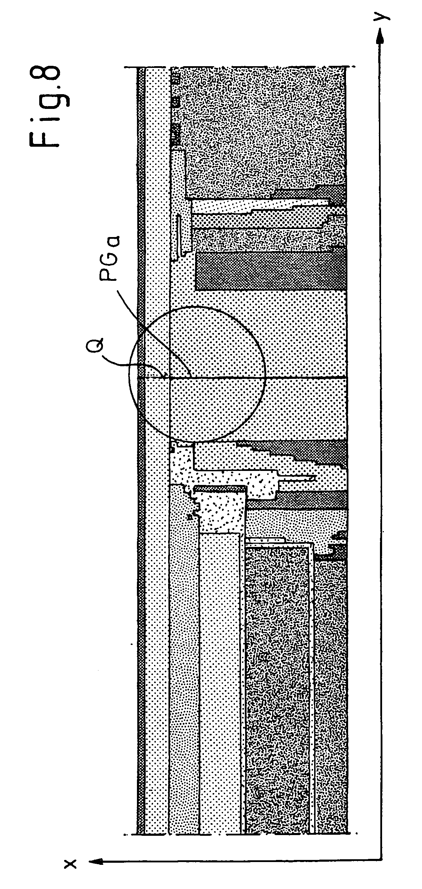

Zur Aufnahme der Topografie eines dreidimensionalen Festkörpers 1 wird, wie bereits erwähnt und in Fig. 2 dargestellt, das bislang nur eindimensional betrachtete System in zwei Dimensioen betrachtet. Das heißt, es wird mit einem zu einem Lichtband 3 aufgeweiteten Laserstrahl gearbeitet. Man spricht von einem Lichtschnittverfahren. Nachdem das reflektierte Licht RL von dem flächenförmigen Lichtaufnahmeelement 6 erfaßt wurde und aus von dem Lichtaufnahmeelement 6 abgegebenen Signalen unter Berücksichtigung des Triangulationswinkels φ und des Basisabstands B in einer nicht dargestellten Datenverarbeitungseinrichtung, wie einem PC, die Meßwerte des Profils P bestimmt und in der Datenverarbeitungsanlage als Profilogramm PG gespeichert werden. Stellvertretend für ein solches Profilogramm PG steht in der schematisierten Darstellung von Fig. 2 der entsprechend bezeichnete Linienzug auf dem Lichtaufnahmeelement 6. Profilogramme aus realen Messungen sind in unterschiedlichen Darstellungsarten in Fig. 7 und 8 gezeigt.

Als auf die auf der Oberfläche des Festkörpers 1 liegende Bereiche Lichtbänder 3 projizierenden Lasereinrichtung 2 wurde ein handelsüblicher Linienlasermodul L200 mit einer Linienlänge LB (Fig. 2) von 300 mm und einer Linienbreite b (Fig. 1) von 1,5 mm, einer Laserleistung von 30 mW und mit sichtbarem roten Licht (Wellenlänge 680 nm) eingesetzt.

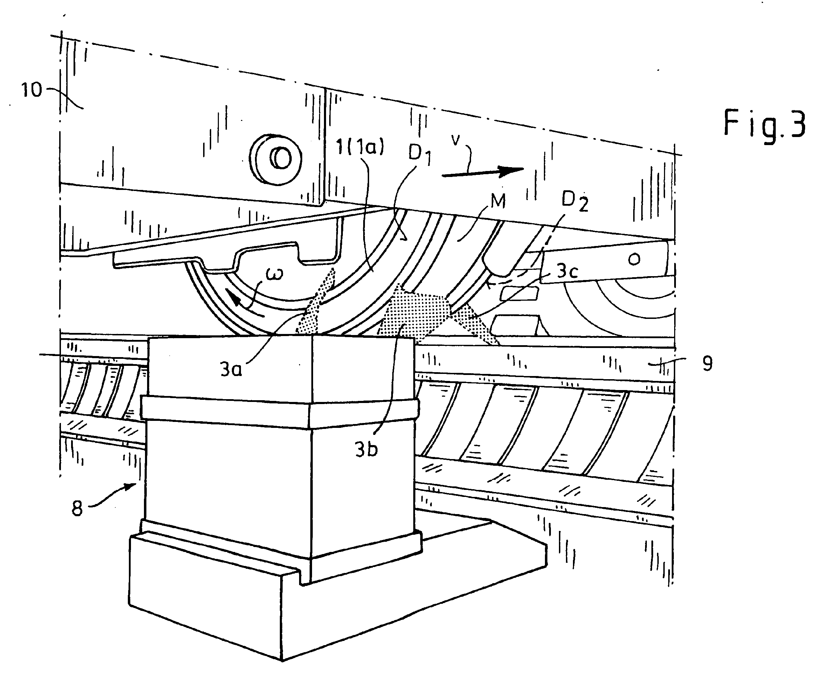

Fig. 3 zeigt - wie ebenfalls bereits erwähnt - eine typische Anwendung des erfindungsgemäßen Verfahrens, und zwar zur Verschleißbestimmung. Die Darstellung gibt eine perspektivische Ansicht eines Verschleißprüfstandes 8 wieder, der für auf Schienen 9 rollende, mit einer translatorischen Geschwindigkeit v und einer Winkelgeschwindigkeit ω vorbeibewegte, Räder 1a als zu vermessende Festkörper 1, konzipiert ist.

Aus der zeichnerischen Darstellung ist ersichtlich, daß es bei diesem Verschleißprüfstand 8 vorgesehen ist, mehrere Profilogramme PG als Teilprofilogramme (in Fig. 7 auch als $PG_a$, $PG_b$ und $PG_c$ bezeichnet) unter Einsatz von drei, auf verschiedene Seiten $D_1$, $D_2$, M der Oberfläche des Festkörpers 1 liegende Bereiche Lichtbänder 3a, 3b, 3c projizierenden Lasereinrichtungen 2 und diesen zugeordneten Abbildungseinrichtungen 5 bestimmt werden. Die Teilprofilogramme $PG_a$, $PG_b$ und $PG_c$ können in der Datenverarbeitungsanlage gespeichert und daraus ein Gesamtprofilogramm GPG gewonnen werden.

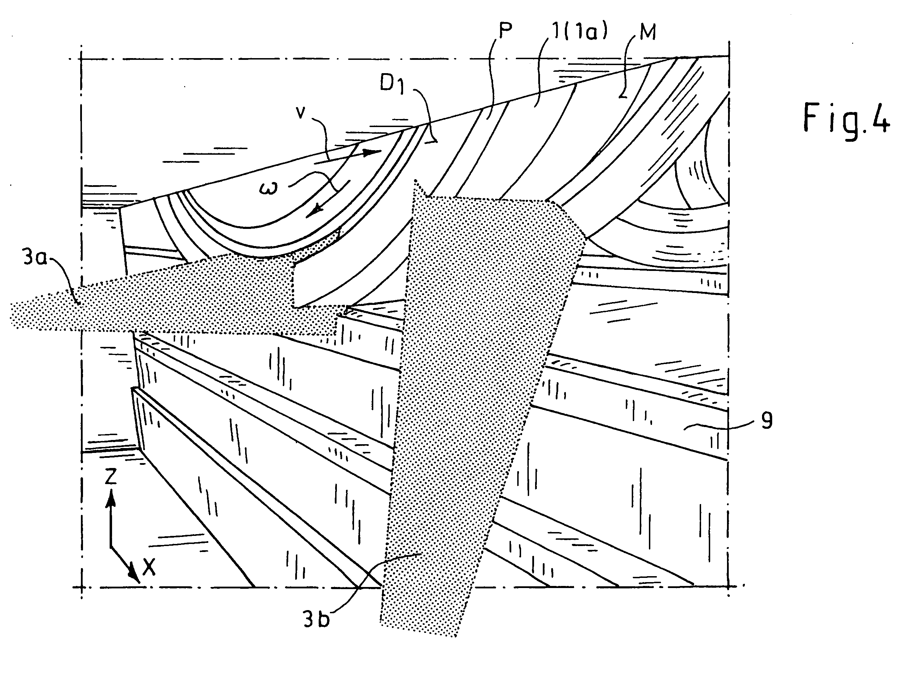

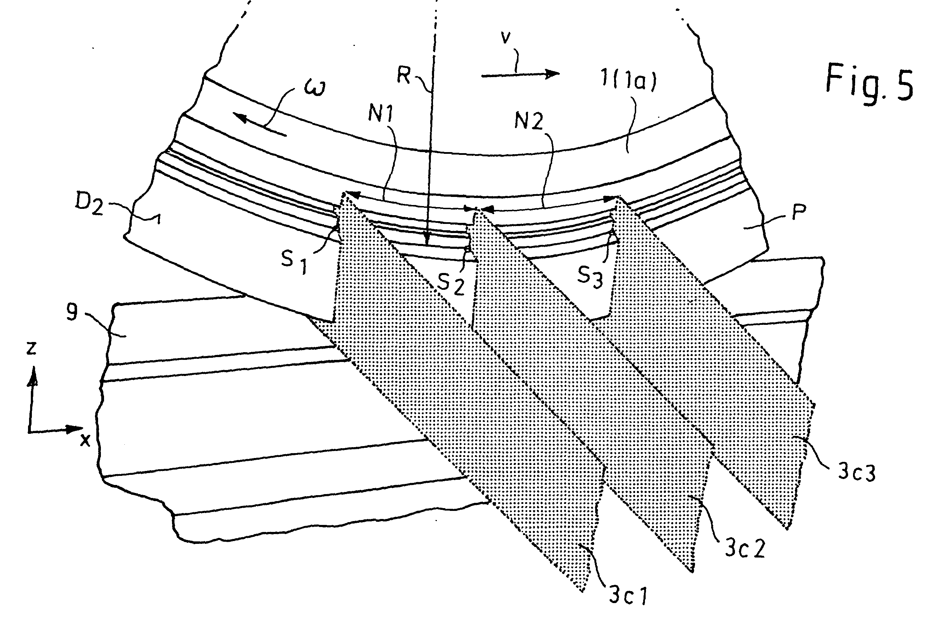

Das Rad 1a des Schienenfahrzeugs 10 stellt einen rotationssymmetrischen, in der Grundgestalt im wesentlichen zylindrischen bzw. ringförmigen Festkörper 1, dar, wobei die drei Bereiche, auf die die Lichtbänder 3a, 3b, 3c projiziert werden, auf den beiden Deckflächen $D_1$, $D_2$ und auf der Mantelfläche M des Zylinders bzw. des Ringes liegen. Wie Fig. 3 und im Detail Fig. 4 und 5 zeigen, brauchen die drei Lichtbänder 3a, 3b, 3c für die Ermittlung des Gesamtprofilogramm GPG keinen geschlossenen Linienzug zu bilden. Es ist auch nicht notwendig, daß das auf die Mantelfläche M projizierte Lichtband 3b parallel zur Achse des Rades 1a verläuft. Eine entsprechende Abweichung von der Achsparallelität kann dadurch ausgeglichen werden, daß die Meßwerte $z_B$ des Profils P unter Verknüpfung mit entsprechend dem Bereich der Oberfläche des Festkörpers bestimmten Korrekturwerten Ko gewonnen werden.

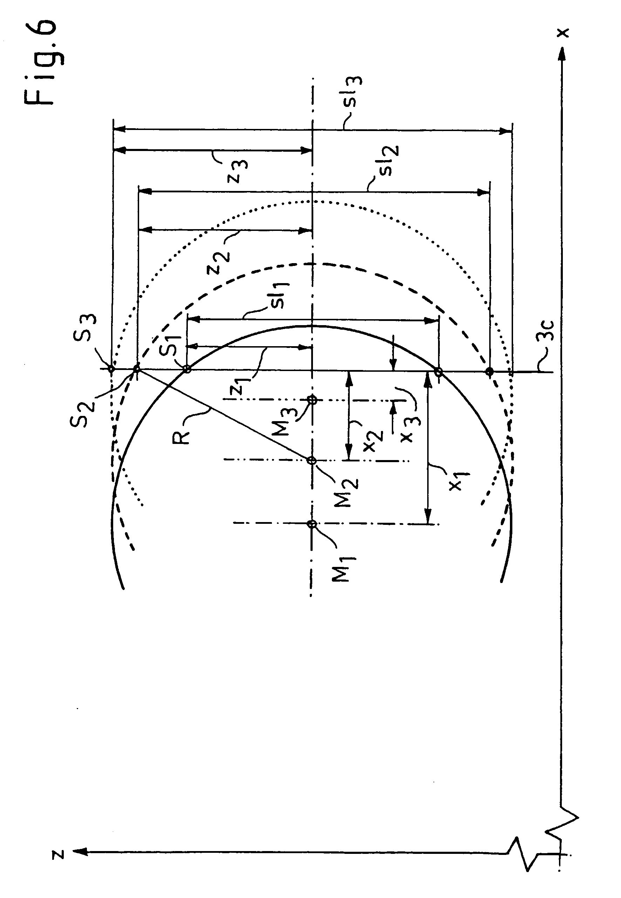

Fig. 5 veranschaulicht die erste und Fig. 6 die zweite der erwähnten Möglichkeiten um einen Radkranzinnenradius R des Rades 1a als feste, langzeitlich unveränderliche geometrische Basisgröße, auf die das Profilogramm PG, die Teilprofilogramme $PG_a$, $PG_b$, $PG_c$ und das Gesamtprofilogramm GPG bezogen werden können, zu ermitteln. Der Radius wird dabei in beiden Fällen aus mindestens drei Meßwerten $z_1$, $z_2$, $z_3$ ermittelt, die durch berührungslose dynamische Messungen am bewegten Rad 1a ermittelt werden und welche in der gleichen Art vorgenommen werden wie die Erfassung des Profilogramms PG bzw. die Erfassung der Teilprofilogramme $PG_a$, $PG_b$, $PG_c$.

Gemäß Fig. 5 werden die berührungslosen dynamischen Messungen am rollenden Rad 1a gleichzeitig mittels mindestens dreier, jeweils zu einem linienförmigen Lichtband 3c1, 3c2, 3c3 aufgeweiteter Lichtstrahlen bei jeweils vorgegebenen Abständen N1, N2 der Bereiche der Oberfläche des Festkörpers 1, auf die die Lichtbänder 3c1, 3c2, 3c3 projiziert werden, vorgenommen.

Gemäß Fig. 6 werden die berührungslosen dynamischen Messungen am rollenden Rad 1a in vorgegebenen Zeitintervallen Δt zu mindestens drei Zeitpunkten $t_1$, $t_2$, $t_3$ mittels eines einzigen zu einem linienförmigen Lichtband 3c aufgeweiteten Lichtstrahl vorgenommen.

Die Messungen erfolgen somit unidirektional, d.h. bei gleicher Ausrichtung der jeweiligen Lichtbänder 3c, 3c1, 3c2, 3c3, jeweils an drei Punkten $S_1$, $S_2$, $S_3$, wobei drei auf einem Kreisbogen mit dem Radius R liegende Meßwerte

$z_1$, $z_2$, $z_3$ als Ordinatenwerte der Punkten $S_1$, $S_2$, $S_3$ in einem kartesischen Koordinatensystems ermittelt werden. Die den Punkten $S_1$, $S_2$, $S_3$ nach der Art, wie in Fig. 6 gezeigt ist, zugeordneten Meßwerte $z_1$, $z_2$, $z_3$ entsprechen jeweils einer Meßlänge des linienförmigen Lichtbandes 3c bzw. 3c1, 3c2, 3c3. Die Meßlängen des linienförmigen Lichtbandes 3c bzw. 3c1, 3c2, 3c3 können für diese Zuordnung problemlos derart transformiert werden, daß die Meßwerte $z_1$, $z_2$, $z_3$ jeweils die halbe Länge einer Sehne $sl_1$, $sl_2$ $sl_3$ durch den Kreisbogen repräsentieren. Die jeweils diesen Meßwerten $z_1$, $z_2$, $z_3$ zugehörigen Abszissenwerte $x_1$, $x_2$, $x_3$ - in Fig. 6 jeweils als zu den drei Zeitpunkten $t_1$, $t_2$, $t_3$ vorliegende Abstände des Kreismittelpunktes $M_1$, $M_2$, $M_3$ vom Lichtband 3c eingezeichnet - ergeben sich entweder im ersten Fall aus den Abständen N1, N2 gemäß Fig. 5 oder im zweiten Fall aus den durch die drei Zeitpunkte $t_1$, $t_2$, $t_3$ der Messung vorgegebenen Zeitintervalle $\Delta t$ durch Multiplikation der Zeitintervalle $\Delta t$ mit der Winkelgeschwindigkeit $\omega$. Die Winkelgeschwindigkeit w kann dabei entweder fest vorgegeben sein oder ebenfalls durch berührungslose dynamische Messungen am rolle n-den Rad 1a mittels eines oder mehrerer linienförmiger Lichtbänder 3 ermittelt werden. Die Auswertung wird erleichtert, wenn Geschwindigkeit, also einerseits die rotierende und damit andererseits auch die translatorische Bewegung des Rades 1a konstant ist.

Der Bezugsradius R des rollenden Rades 1a kann nach der Bestimmung der Meßwerte $z_1$, $z_2$, $z_3$ aus folgendem Gleichungssystem ermittelt werden:

$$R^2 = x_1^2 + z_1^2 \qquad\qquad (3)$$

$$R^2 = x_2^2 + z_2^2 \qquad\qquad (4)$$

$$R^2 = x_3^2 + z_3^2 \qquad\qquad (5)$$

$$x_1 - x_2 = k * (x_2 - x_3) \qquad\qquad (6).$$

Die Größen R, sowie $x_1$, $x_2$ und $x_3$ stellen darin jeweils Unbekannte dar. Die Größe k in Gleichung (6) ist ein bekannter, den vorgegebenen Zeitintervallen $\Delta t$ oder den Abständen N1, N2 der Bereiche der Oberfläche des Rades 1a entsprechender Faktor, der für den bevorzugten Fall konstanter Zeitintervalle $\Delta t$ bzw. äquidistanter Abstände N1, N2 den Wert 1 annimmt.

Der ermittelte Radius R kann einerseits als Grundlinie für die Meßwerte $z_B$ der Profilhöhe dienen, die auf der Mantelfläche M des Rades 1a ermittelt werden, andererseits ist es möglich, diesen Radius R zur Bestimmung von Korrekturwerten Ko, die entsprechend dem vom Lichtband 3 bzw. 3a, 3b, 3c 3c1, 3c2, 3c3 beleuchteten Bereich der Oberfläche des Festkörpers 1 berücksichtigt werden, heranzuziehen. Die Notwendigkeit der Berücksichtigung derartiger Korrekturwerte Ko ergibt sich beispielsweise daraus, daß die Sehnen $sl_1$, $sl_2$, $sl_3$ in Fig. 6 jeweils unterschiedliche Zentriwinkel aufspannen, wodurch sich unterschiedliche lokale Profilverzerrungen einstellen. Die Zentriwinkel liegen dabei bei zwischen 0° im ersten Extremfall, wenn das Lichtband 3c eine Tangente an den Umfang des betrachteten Kreisbogens des Rades 1a bildet und bei 180° im anderen Extremfall, wenn das Lichtband 3c mit dem Durchmesser 2R des betrachteten Kreisbogens des Rades 1a zusammenfällt. Die größte Sehnenlänge $sl_3$ enthält die meisten Informationen über das zu bestimmende Profil und weist die geringste lokale Verzerrung auf.

Aus diesen Gründen ist es daher außerordentlich vorteilhaft, wenn das in Fig. 7 dargestellte Gesamtprofilogramm GPG eines rollenden Festkörpers 1, im dargestellten Fall des Rades 1a, aus drei von den beiden Deckflächen $D_1$, $D_2$ und auf der Mantelfläche M gleichzeitig zu einem Erfassungszeitpunkt $t_k$ bestimmten Teilprofilogrammen gewonnen wird, wobei der Erfassungszeitpunkt $t_k$ der einzelnen Teilprofilogramme derart gewählt wird, daß ein zu diesem Erfassungszeitpunkt $t_k$ ermittelter Meßwert $z_k$ - im vorliegenden Fall $z_3$ - aus mindestens drei auf einem Kreisbogen mit dem Radius R in einer der Deckflächen $D_1$, $D_2$ liegenden, jeweils zu aufeinanderfolgenden Zeitpunkten $t_1$, $t_2$, $t_3$ und unidirektional aus der jeweiligen Länge LB des linienförmigen Lichtbandes 3c, 3c1, 3c2, 3c3 bestimmten Meßwerten $z_1$, $z_2$, $z_3$, die jeweils der halben Länge einer Sehne $sl_1$, $sl_2$, $sl_3$ durch den Kreisbogen entsprechen, ein Maximum annimmt. Selbstverständlich ist die Anwendung dieses Kriteriums der Wahl des Erfassungszeitpunkt $t_k$ nicht auf drei Meßwerte $z_1$, $z_2$, $z_3$ beschränkt. Bei der Zugrundelegung von mehr als drei Meßwerten $z_1$, $z_2$, $z_3$ können sogar noch bessere Ergebnisse erzielt werden, insofern die ermittelte größte halbe Sehnenlänge $sl_3$ weniger vom Radius R abweicht bzw. denselben Wert wie der Radius R annimmt.

Fig. 7 zeigt des Weiteren, daß das jeweilige Profilogramm PG, die Teilprofilogramme $PG_a$, $PG_b$, $PG_c$ und/oder das Gesamtprofilogramm GPG mit jeweils mit einem oder mehreren Bezugsprofilogramm(en) - in der zeichnerischen Darstellung ein Bezugsprofilogramm BP1 für maximale Meßwerte $z_B$ des Profils P und ein Bezugsprofilogramm BP2 für maximale Meßwerte $z_B$ des Profils P und verglichen und die jeweiligen Abweichungen $\Delta$PG von dem jeweiligen Bezugsprofilogramm BP1, BP2 festgestellt werden können. Im dargestellten Fall treten derartige Abweichungen in dem strichpunktiert dargestellten Bereich auf. Bei den Bezugsprofilogrammen BP1, BP2 kann es sich bevorzugt um zulässige Sollmaße handeln, ein Bezugsprofilogramm BP1, BP2 könnte aber auch ein gespeicherter Datensatz von Meßwerten $z_B$ aus einer früheren Messung sein, so daß die jeweiligen Abweichungen $\Delta$PG Aufschluß darüber geben, wie groß der seit der zurückliegenden Messung aufgetretene Verschleiß ist.

Während die Darstellung des Profils P in Fig. 7 nur eine zweidimensionale ist, bei der die Meßwerte $z_B$ des Profils P als Linienzug - Vektoren x, z - über den Querschnitt Q des Rades 1a dargestellt sind, veranschaulicht die Darstellung des Profils P in Fig. 8 den dreidimensionalen Charakter des erfindungsgemäßen Verfahrens. In Fig. 8 sind über der unter Zuhilfenahme des oben erwähnten Radius R ermittelten Abwicklung der Deckfläche $D_1$ des Rades 1a, durch verschiedene Grauwerte die Meßwerte $z_B$ des Profils P als Vektoren x, y, z dargestellt. Der Absolutwert der Meßgenauigkeit $dz_A$ entsprechend Gleichung (2) liegt bei etwa 0,5 mm. Die mit Q bezeichnete, durch Einkreisung markierte Linie bezeichnet dabei den in Fig. 7 dargestellten Querschnitt Q des Rades 1a, wobei an dieser Stelle - wie angegeben - das Teilprofil $PG_a$ gemäß Fig. 7 vorliegt. Anstelle der Grauwerte können im Sinne der Erhöhung der Anschaulichkeit in einem geeigneten Display auch Farben zur Darstellung verwendet werden.

Das erfindungsgemäße Verfahren ermöglicht vorteilhafterweise die Erfassung eines Profils P in eine außerordentlich kurze Bestimmungszeit. So kann in einer Zeit von 5 Sekunden mit Hilfe von beidseitig von Schienen 9, auf denen ein Schienenfahrzeug 10 vorbeirollt, angeordneten Lasereinrichtungen 2 und Abbildungseinrichtungen 5 für fünf Drehgestelle, d.h. zehn Radsätze, als 20 Räder 1a, jeweils ein dreidimensionales Gesamtprofilogramm GPG erstellt werden.

Die vorliegende Erfindung ist nicht auf das dargestellte Ausführungsbeispiel beschränkt, sondern umfaßt alle im Sinne der Erfindung gleichwirkenden Mittel und Maßnahmen wie in Anspruch 1 definiert. So besteht eine weitere Möglichkeit in der Anwendung von sogenannten Streifenprojektionsverfahren unter Einsatz von strukturierter oder codierter Beleuchtung. Diese Verfahren basieren ebenfalls auf dem Triangulationsprinzip, wobei der gesamte Festkörper 1 von einem der Lasereinrichtung 2 entsprechenden Projektor mit einem rechnerisch vorgegebenen Lichtmuster beleuchtet wird. Während der Aufnahme wird das Lichtmuster in bestimmter Weise so verändert, daß aus der resultierenden Intensitätsverteilung des aufgenommenen Bildes auf die Topografie bestimmt werden kann.

Für die Ausführung sämtlicher Rechenoperationen können - wie die der angegebenen Gleichungen (1) bis (6) in der Datenverarbeitungseinrichtung geeignete Softwaremodule eingesetzt werden.

**Bezugszeichen**

| | |
|---|---|
| 1 | Festkörper |
| 1a | Rad |
| 2 | Lasereinrichtung |
| 3, 3a, 3b, 3c, 3c1, 3c2, 3c3 | Lichtbänder |
| 4 | Linse von 5 |
| 5 | Abbildungseinrichtung |
| 6 | Lichtaufnahmeelement |
| 7 | Gehäuse |
| 8 | Verschleißprüfstand |
| 9 | Schiene |
| 10 | Schienenfahrzeug |
| | |
| A-A | optische Achse von 6 |
| B | Basisabstand |
| b | Breite von 3, 3a, 3b, 3c, 3c1, 3c2, 3c3 |
| Dz | Meßbereich von z |
| $dz_A$ | Auflösung von $z_A$ |
| $D_1$, $D_2$ | Deckflächen von 1, 1a |
| f | Frequenz |

| GPG | Gesamtprofilogramm |
|---|---|
| H | Abstand 4/6 (Fig. 1) |
| Kv | Korrekturwert entsprechend v, ω |
| Ko | Korrekturwert entsprechend Bereich/Lage von 3, 3a, 3b, 3c, 3c1, 3c2, 3c3 |
| k | Faktor entsprechend N1, N2 bzw. Δt |
| L | Arbeitsabstand |
| LL | Linienlänge von 3, 3a, 3b, 3c, 3c1, 3c2, 3c3 |
| M | Mantelfläche von 1, 1a |
| N1, N2 | Abstände zwischen 3c1, 3c2, 3c3 |
| O-O | optische Achse von 2 |
| P | Profil |
| PG | Profilogramme |
| $PG_a$, $PG_b$, $PG_c$ | Teilprofilogramme |
| R | Radius |
| RL | reflektiertes Licht |
| v | translatorische Geschwindigkeit von 1, 1a |
| $t_k$, $t_1$, $t_2$, $t_3$ | Meß-Zeitpunkte |
| $S_1$, $S_2$, $S_3$ | Punkte auf Umkreis um R |
| $sl_1$, $sl_2$, $sl_3$ | Sehnenlängen bei $S_1$, $S_2$, $S_3$ |
| x | Längenkoordinate |
| $x_A$ | Bildflecklage von RL auf 6 |
| $x_{max}$ | Maximalwert von x |
| $x_{min}$ | Minimalwert von x |
| $x_1$, $x_2$, $x_3$ | Meßwerte Länge bei $S_1$, $S_2$, $S_3$ |
| y | Längenkoordinate |
| z | Höhenkoordinate |
| $z_A$ | Meßwert, Auftreffort von 3, 3a, 3b, 3c, 3c1, 3c2, 3c3 |
| $z_B$ | korrigierter Meßwert aus $z_A$ |
| $z_{max}$ | Maximalwert von z |
| $z_{min}$ | Minimalwert von z |
| $z_1$, $z_2$, $z_3$ | Meßwerte Höhe bei $S_1$, $S_2$, $S_3$ |
| ΔPG | Profilabweichung |
| Δt | Zeitintervall |
| φ | Triangulationswinkel |

**Patentansprüche**

1. Verfahren zur berührungslosen dynamischen Erfassung des Profils (P) eines Festkörpers (1, 1a), insbesondere zum Zweck einer Bestimmung von aufgetretenem Verschleiß, wobei der Festkörper (1, 1a) als Schienenfahrzeugrad (1a) rotationssymmetrisch und in der Grundgestalt im Wesentlichen zylindrisch oder ringförmig ausgebildet ist, wobei mindestens ein von einer Lasereinrichtung (2) erzeugter, zu einem linienförmigen Lichtband (3, 3a, 3b, 3c, 3c1, 3c2, 3c3) aufgeweiteter Lichtstrahl auf mindestens einen Bereich der Oberfläche des Festkörpers (1, 1a), der auf einer Schiene (9) an der Lasereinrichtung (2) vorbei bewegt wird, projiziert wird und das von der Oberfläche des Festkörpers (1, 1a) reflektierte Licht (RL) in einer der Lasereinrichtung (2) zugeordneten Abbildungseinrichtung (5), deren optische Achse (A-A) in einem festen Triangulationswinkel (φ) zur Projektionsrichtung (O-O) der Lasereinrichtung (2) steht und die in einem festen Basisabstand (B) zur Lasereinrichtung (2) angeordnet ist, fokussiert und mit einer gegenüber einer Bewegungsgeschwindigkeit (v) des Festkörpers (1, 1a) hohen Frequenz (f) mittels eines flächenförmigen Lichtaufnahmeelementes (6) erfasst wird, wonach aus von dem Lichtaufnahmeelement (6) abgegebenen Signalen, in Abhängigkeit von dem Triangulationswinkel (φ) und dem Basisabstand (B) in einer Datenverarbeitungseinrichtung durch trigonometrische Beziehungen und unter Verknüpfung mit entsprechend der Bewegungsgeschwindigkeit (v) des Festkörpers (1, 1a) bestimmten Korrekturwerten (Kv) die Messwerte ($z_B$) des Profils (P) gewonnen und in der Datenverarbeitungseinrichtung als Profilogramm (PG) gespeichert werden, wobei mehrere Teilprofilogramme ($PG_a$, $PG_b$, $PG_c$) ermittelt werden, die auf eine feste langzeitlich unveränderliche geometrische Basisgröße des Schienenfahrzeugrads (1a) bezogen werden, und daraus ein Gesamtprofilogramm (GPG) gewonnen wird,

**dadurch gekennzeichnet, dass** die Messwerte ($z_B$) des Profils (P) unter zusätzlicher Verknüpfung mit entsprechend dem Bereich der Oberfläche des Festkörpers (1, 1a) bestimmten Korrekturwerten (Ko) gewonnen werden, welche vektorielle, in Abhängigkeit von einem Radius (R) des Festkörpers (1, 1a) bestimmte Faktoren und/oder Summanden sind, wobei zur Erfassung der Teilprofilogramme ($PG_a$, $PG_b$, $PG_c$) ein Messwert ($z_k$) verwendet wird, der aus mindestens drei, auf einem Kreisbogen mit dem Radius (R) liegenden, jeweils einer Messlänge des linienförmigen Lichtbandes (3c) entsprechenden Messwerten ($z_1$, $z_2$, $z_3$) ein Maximum ist, wobei die Messwerte ($z_1$, $z_2$, $z_3$) auf dem Kreisbogen ermittelt werden, indem jeweils entweder

a) gleichzeitig mindestens drei, jeweils zu einem linienförmigen Lichtband (3c1, 3c2, 3c3) aufgeweitete Lichtstrahlen in jeweils vorgegebenen Abständen (N1, N2) auf die Bereiche der Oberfläche des Festkörpers (1, 1a), projiziert werden, oder

b) ein einziger zu einem linienförmigen Lichtband (3c) aufgeweiteter Lichtstrahl in vorgegebenen Zeitintervallen (Δt) zu mindestens drei Zeitpunkten ($t_1$, $t_2$, $t_3$) auf die Oberfläche des Festkörpers (1, 1a), projiziert wird.

2. Verfahren nach Anspruch 1,
**dadurch gekennzeichnet, dass** das Schienefahrzeugrad (1a) eine rotierende Bewegung ausführt, die mit konstanter Winkelgeschwindigkeit (ω) abläuft, welche kleiner als 15 $s^{-1}$, vorzugsweise kleiner als 6 $s^{-1}$ ist.

3. Verfahren nach Anspruch 1 oder 2,
**dadurch gekennzeichnet, dass** die entsprechend der Bewegungsgeschwindigkeit (v, ω) des Festkörpers (1, 1a) bestimmten Korrekturwerte (Kv) vektorielle, der Bewegungsgeschwindigkeit (v, ω) proportionale Faktoren und/oder Summanden sind.

4. Verfahren nach einem der Ansprüche 1 bis 3,
**dadurch gekennzeichnet, dass** zur Bestimmung der entsprechend der Bewegungsgeschwindigkeit (v, ω) ermittelten Korrekturwerte (Kv) eine korrelative Verknüpfung der Bewegungsgeschwindigkeit (v, ω) mit der Frequenz (f) der Erfassung des reflektierten Lichtes (RL) erfolgt.

5. Verfahren nach einem der Ansprüche 1 bis 4,
**dadurch gekennzeichnet, dass** mehrere Profilogramme (PG) als Teilprofilogramme ($PG_a$, $PG_b$, $PG_c$) unter Einsatz von mindestens drei, auf verschiedene Seiten der Oberfläche des Festkörpers (1, 1a) liegende Bereiche Lichtbänder (3, 3a, 3b, 3c, ec1, 3c2, 3c3) projizierenden Lasereinrichtungen (2) und diesen zugeordneten Abbildungseinrichtungen (5) bestimmt werden, die Teilprofilogramme ($PG_a$, $PG_b$, $PG_c$) in der Datenverarbeitungsanlage gespeichert werden und daraus ein Gesamtprofilogramm (GPG) gewonnen wird.

6. Verfahren nach einem der Ansprüche 1 bis 5,
**dadurch gekennzeichnet, dass** das Profilogramm (PG), die Teilprofilogramme ($PG_a$, $PG_b$, $PG_c$) und/oder das Gesamtprofilogramm (GPG) mit jeweils einem oder mehreren Bezugsprofilogramm(en) (BP1, BP2) verglichen und die jeweiligen Abweichungen (ΔPG) von dem jeweiligen Bezugsprofilogramm (BP1, BP2) festgestellt werden.

7. Verfahren nach einem der Ansprüche 1 bis 6,
**dadurch gekennzeichnet, dass** das Profilogramm (PG), die Teilprofilogramme ($PG_a$, $PG_b$, $PG_c$), das Gesamtprofilogramm (GPG), das jeweilige Bezugsprofilogramm (BP1, BP2) und/oder die jeweiligen Abweichungen (ΔPG) auf eine feste, langzeitlich unveränderliche geometrische Basisgröße, und zwar einen nichtverschleißenden Radkranzinnendurchmesser (2*R), bezogen werden.

8. Verfahren nach Anspruch 7,
**dadurch gekennzeichnet, dass** die Basisgröße aus mindestens drei Messwerten ($z_1$, $z_2$, $z_3$) ermittelt wird, die durch berührungslose dynamische Messungen ermittelt werden, welche in der gleichen Art vorgenommen werden wie die der Messwerte ($z_1$, $z_2$, $z_3$) zur Erfassung des Profilogramms (PG) bzw. zur Erfassung der Teilprofilogramme ($PG_a$, $PG_b$, $PG_c$).

9. Verfahren nach Ansprucke 7 oder 8,
**dadurch gekennzeichnet, dass** die Basisgröße ein Radius (R) des rotationssymmetrischen Körpers ist, der aus folgendem Gleichungssystem ermittelt wird:

$$R^2 = x_1{}^2 + z_1{}^2 \qquad (1)$$

$$R^2 = x_2{}^2 + z_2{}^2 \qquad (2)$$

$$R^2 = x_3{}^2 + z_3{}^2 \qquad (3)$$

$$x_1 - x_2 = k * (x_2 - x_3) \qquad (4),$$

wobei $z_1$, $z_2$, $z_3$ drei auf einem Kreisbogen mit dem Radius (R) liegende, jeweils unidirektional ermittelte, der Ordinate (z) eines kartesischen Koordinatensystems entsprechende Messwerte der Länge des linienförmigen Lichtbandes (3, 3a, 3b, 3c, 3c1, 3c2, 3c3), die jeweils der halben Länge einer Sehne ($sl_1$, $sl_2$, $sl_3$) durch den Kreisbogen entsprechen, $x_1$, $x_2$, $x_3$ die jeweils diesen Messwerten zugehörigen Abszissenwerte (x) und k ein vorgegebenen Zeitintervallen ($\Delta t$) oder Abständen (n1, N2) der Bereiche der Oberfläche des Festkörpers (1, 1a) entsprechender Faktor sind.

**10.** Verfahren nach einem der Ansprüche 1 bis 9,
**dadurch gekennzeichnet, dass** das Profilogramm (PG), die Teilprofilogramme ($PG_a$, $PG_b$, $PG_c$), das Gesamtprofilogramm (GPG), das jeweilige Bezugsprofilogramm (BP1, BP2) und/oder die jeweiligen Abweichungen ($\Delta PG$) in einer Anzeigevorrichtung, wie einem Display, visualisiert werden.

**11.** Verfahren nach einem der Ansprüche 1 bis 10,
**dadurch gekennzeichnet, dass** als Lichtaufnahmeelement (6) eine digitalisierte Signale liefernde Vorrichtung, wie eine trigger-gesteuerte CCD-Kamera, eingesetzt wird.

**12.** Verfahren nach einem der Ansprüche 1 bis 11,
**dadurch gekennzeichnet, dass** als Lichtaufnahmeelement (6) ein positionsempfindlicher Detektor (position sensitive device), wie ein Fotodiodenfeld, eingesetzt wird.

**13.** Verfahren nach einem der Ansprüche 1 bis 12,
**dadurch gekennzeichnet, dass** das Lichtband (3, 3a, 3b, 3c, 3c1, 3c2, 3c3) eine Breite (b) im Bereich von 0,3 mm bis 6,5 mm, insbesondere im Bereich von 0,8 mm bis 2,2 mm, aufweist.

**14.** Verfahren nach einem der Ansprüche 1 bis 13,
**dadurch gekennzeichnet, dass** das Lichtband (3, 3a, 3b, 3c, 3c1, 3c2, 3c3) eine Länge (LB) im Bereich von 50 mm bis 750 mm, insbesondere im Bereich von 200 mm bis 400 mm, aufweist.

**15.** Verfahren nach einem der Ansprüche 1 bis 14,
**dadurch gekennzeichnet, dass** der Triangulationswinkel ($\varphi$) Werte im Bereich von 15° bis 40°, insbesondere im Bereich von 20° mm bis 30°, aufweist.

**16.** Verfahren nach einem der Ansprüche 1 bis 15,
**dadurch gekennzeichnet, dass** die Frequenz (f), mit der das von der Oberfläche des Festkörpers (1, 1a) reflektierte Licht (RL) mittels des Lichtaufnahmeelementes (6) erfaßt wird, im Bereich von 25 Hz bis 100 kHz, vorzugsweise im Bereich von 1 kHz bis 10 kHz, liegt.

**17.** Verfahren nach einem der Ansprüche 1 bis 16,
**dadurch gekennzeichnet, dass** eine translatorische Bewegungsgeschwindigkeit (v) des Festkörpers kleiner als 3,5 m/s, vorzugsweise kleiner als 1,5 m/s ist.

**18.** Verfahren nach einem der Ansprüche 1 bis 17,

**dadurch gekennzeichnet, dass** ein mittlerer Arbeitsabstand (L) der Lasereinrichtung (2) und/oder der Abbildungseinrichtung (5) von dem Bereich der Oberfläche des Festkörpers (1, 1a) auf die das Lichtband (3, 3a, 3b, 3c, 3c1, 3c2, 3c3) projiziert wird, im Bereich von 20 mm bis 650 mm, insbesondere im Bereich von 150 mm bis 350 mm, liegt.

**19.** Verfahren nach einem der Ansprüche 1 bis 18,
**dadurch gekennzeichnet, dass** der Basisabstand (B) zwischen der Abbildungseinrichtung, (5) insbesondere dem Mittelpunkt einer fokussierenden Linse (4) der Abbildungseinrichtung (5), und der optischen Achse (O-O) der Lasereinrichtung im Bereich von 30 mm bis 450 mm, insbesondere im Bereich von 60 mm bis 270 mm, liegt.

**20.** Verfahren nach einem der Ansprüche 1 bis 19,
**dadurch gekennzeichnet, dass** für das Profilogramm (PG), die Teilprofilogramme ($PG_a$, $PG_b$, $PG_c$), das Gesamtprofilogramm (GPG), das jeweilige Bezugsprofilogramm (BP1, BP2) und/oder die jeweiligen Abweichungen ($\Delta$PG) eine Auflösung ($dz_A$) von weniger als 2,0 mm, insbesondere von weniger als 0,5 mm, zugrundegelegt wird.

**Claims**

**1.** A method of contact-less dynamic detection of the profile (**P**) of a solid body (1, 1a), in particular for the purpose of determining the wear which occurs, wherein the solid body (1, 1a) is made substantially cylindrical or annular in its basic shape and rotationally symmetrical in the form of a rail vehicle wheel (1a), wherein at least one light beam produced by a laser device (2) and enlarged to form a linear light band (3, 3a, 3b, 3c, 3c1, 3c2, 3c3) is projected onto at least one area of the surface of the solid body (1, 1a) which is moved on a rail (9) past the laser device (2), and the light (**RL**) reflected from the surface of the solid body (1, 1a) is focused in an imaging device (5), which is associated with the laser device (2) and the optical axis (**A-A**) of which is at a fixed triangulation angle ($\varphi$) with respect to the projection direction (**O-O**) of the laser device (2) and which is arranged at a fixed base distance (**B**) from the laser device (2), and is detected by means of a planar light-recording element (6) at a frequency (**f**) higher than a velocity of movement (**v**) of the solid body (1, 1a), after which the measurement values ($z_B$) of the profile (**P**) are obtained from signals emitted by the light-recording element (6), in a manner dependent upon the triangulation angle ($\varphi$) and the base distance (**B**), in a data-processing device by trigonometric relationships and whilst linking correction values (**Kv**) determined in accordance with the velocity of movement (**v**) of the solid body (1, 1a) and they are stored in the form of a profilogram (**PG**) in the data-processing device, wherein a plurality of partial profilograms (**$PG_a$, $PG_b$, $PG_c$**) are determined which relate to a fixed long-term invariable geometrical basic parameter of the rail vehicle wheel (1a), and an overall profilogram (**GPG**) is formed from them, **characterized in that** the measured values ($z_B$) of the profile (**P**) are obtained whilst additionally linking correction values (**Ko**) which are determined in accordance with the area of the surface of the solid body (1, 1a) and which are vectorial factors and/or summands determined in a manner dependent upon a radius (**R**) of the solid body (1, 1a), wherein a measured value ($z_k$), which is a maximum of at least three measured values ($z_1$, $z_2$, $z_3$) situated on an arc with the radius (**R**) and corresponding in each case to a measured length of the linear light band (3c), is used to detect the partial profilograms (**$PG_a$, $PG_b$, $PG_c$**), wherein the measured values ($z_1$, $z_2$, $z_3$) on the arc are determined **in that**, in each case, either

a) at least three light beams enlarged in each case to form a linear light band (3c1, 3c2, 3c3) are projected simultaneously onto the areas of the surface of the solid body (1, 1a) at pre-set distances (**N1, N2**) in each case, or
b) a single light beam enlarged to form a linear light band (3c) is projected onto the surface of the solid body (1, 1a) at pre-set time intervals ($\Delta$**t**) at at least three moments in time (**$t_1$, $t_2$, $t_3$**).

**2.** A method according to Claim 1, **characterized in that** the rail vehicle wheel (1a) performs a rotary movement which takes place at a constant angular speed ($\omega$) which is less than 15 $s^{-1}$, and preferably less than 6 $s^{-1}$.

**3.** A method according to Claim 1 or 2, **characterized in that** the correction values (**Kv**) determined in accordance with the velocity of movement (**v, $\omega$**) of the solid body (1, 1a) are vectorial factors and/or summands proportional to the velocity of movement (**v, $\omega$**).

**4.** A method according to any one of Claims 1 to 3, **characterized in that** a correlative linking of the velocity of movement (**v, $\omega$**) with the frequency (**f**) of the detection of the reflected light (**RL**) is carried out in order to determine the correction values (**Kv**) determined in accordance with the velocity of movement (**v, $\omega$**).

**5.** A method according to any one of Claims 1 to 4, **characterized in that** a plurality of profilograms (**PG**) in the form

of partial profilograms ($PG_a$, $PG_b$, $PG_c$) are determined whilst using laser devices (2) - projecting light bands (3, 3a, 3b, 3c, 3c1, 3c2, 3c3) onto at least three areas situated on different sides of the surface of the solid body (1, 1a) - and imaging devices (5) associated with them, the partial profilograms ($PG_a$, $PG_b$, $PG_c$) are stored in the data-processing unit and an overall profilogram (**GPG**) is obtained from them.

6. A method according to any one of Claims 1 to 5, **characterized in that** the profilogram (**PG**), the partial profilograms ($PG_a$, $PG_b$, $PG_c$) and/or the overall profilogram (**GPG**) is or are compared with one or more reference profilograms (**BP1**, **BP2**) in each case, and the respective deviations ($\Delta$**PG**) from the respective reference profilogram (**BP1, BP2**) are established.

7. A method according to any one of Claims 1 to 6, **characterized in that** the profilogram (**PG**), the partial profilograms ($PG_a$, $PG_b$, $PG_c$), the overall profilogram (**GPG**), the respective reference profilogram (**BP1, BP2**) and/or the respective deviations ($\Delta$**PG**) relate to a fixed long-term invariable geometrical basic parameter, namely a non-wearing internal diameter (**2 * R**) of the wheel rim.

8. A method according to Claim 7, **characterized in that** the basic parameter is determined from at least three measured values ($z_1, z_2, z_3$) which are determined by contact-less dynamic measurements, which are carried out in the same way as those of the measured values ($z_1, z_2, z_3$) for detecting the profilogram (**PG**) or for detecting the partial profilograms ($PG_a$, $PG_b$, $PG_c$).

9. A method according to Claim 7 or 8, **characterized in that** the basic parameter is a radius (**R**) of the rotationally symmetrical body which is determined from the following system of equations:

$$R^2 = x_1{}^2 + z_1{}^2 \qquad (1)$$

$$R^2 = x_2{}^2 + z_2{}^2 \qquad (2)$$

$$R^2 = x_3{}^2 + z_3{}^2 \qquad (3)$$

$$x_1 - x_2 = k * (x_2 - x_3) \quad (4),$$

in which $z_1, z_2, z_3$ are three measured values of the length of the linear light band (3, 3a, 3b, 3c, 3c1, 3c2, 3c3) which are situated on an arc with the radius (**R**), are determined unidirectionally in each case, correspond to the ordinate (**z**) of a Cartesian system of co-ordinates and correspond in each case to half the length of a chord ($sl_1$, $sl_2$, $sl_3$) through the arc, $x_1, x_2, x_3$ are the abscissa values (**x**) associated in each case with the said measured values, and **k** is a factor corresponding to pre-set time intervals ($\Delta$**t**) or distances (**n1, N2**) of the areas of the surface of the solid body (1, 1a).

10. A method according to any one of Claims 1 to 9, **characterized in that** the profilogram (**PG**), the partial profilograms ($PG_a$, $PG_b$, $PG_c$), the overall profilogram (**GPG**), the respective reference profilogram (**BP1, BP2**) and/or the respective deviations ($\Delta$**PG**) are visualized in a display apparatus, such as a display.

11. A method according to any one of Claims 1 to 10, **characterized in that** an apparatus delivering digitalized signals, such as a trigger-controlled CCD camera, is used as a light-recording element (6).

12. A method according to any one of Claims 1 to 11, **characterized in that** a position-sensitive detector (position-sensitive device), such as a photo-diode field, is used as a light-recording element (6).

13. A method according to any one of Claims 1 to 12, **characterized in that** the light band (3, 3a, 3b, 3c, 3c1, 3c2, 3c3) has a width (**b**) in the range of from 0·3 mm to 6·5 mm, in particular in the range of from 0.8 mm to 2·2 mm.

**14.** A method according to any one of Claims 1 to 13, **characterized in that** the light band (3, 3a, 3b, 3c, 3c1, 3c2, 3c3) has a length (**LB**) in the range of from 50 mm to 750 mm, in particular in the range of from 200 mm to 400 mm.

**15.** A method according to any one of Claims 1 to 14, **characterized in that** the triangulation angle (φ) has values in the range of from 15° to 40°, in particular in the range of from 20° to 30°.

**16.** A method according to any one of Claims 1 to 15, **characterized in that** the frequency (**f**) at which the light (**RL**) reflected from the surface of the solid body (1, 1a) is detected by means of the light-recording element (6) is in the range of from 25 Hz to 100 kHz, and preferably in the range of from 1 kHz to 10 kHz.

**17.** A method according to any one of Claims 1 to 16, **characterized in that** a translational velocity of movement (**v**) of the solid body is less than 3·5 m/s, and preferably less than 1·5 m/s.

**18.** A method according to any one of Claims 1 to 17, **characterized in that** an average operative distance (**L**) of the laser device (2) and/or of the imaging device (5) from the area of the surface of the solid body (1, 1a), onto which the light band (3, 3a, 3b, 3c, 3c1, 3c2, 3c3) is projected, is in the range of from 20 mm to 650 mm, in particular in the range of from 150 mm to 350 mm.

**19.** A method according to any one of Claims 1 to 18, **characterized in that** the base distance (**B**) between the imaging device (5), in particular the mid point of a focusing lens (4) of the imaging device (5), and the optical axis (**O-O**) of the laser device is in the range of from 30 mm to 450 mm, in particular in the range of from 60 mm to 270 mm.

**20.** A method according to any one of Claims 1 to 19, **characterized in that** a resolution (**dz$_A$**) of less than 2·0 mm, in particular of less than 0·5 mm, is taken as a basis for the profilogram (**PG**), the partial profilograms (**PG$_a$, PG$_b$, PG$_c$**), the overall profilogram (**GPG**), the respective reference profilogram (**BP1, BP2**) and/or the respective deviations (Δ**PG**).

### Revendications

**1.** Procédé pour la saisie dynamique sans contact du profil (P) d'un corps solide (1, 1a), en particulier en vue de déterminer une usure survenue, dans lequel le corps solide (1, 1a) en tant que roue de véhicule sur rails (1a) est réalisé en symétrie de révolution et avec une forme de base substantiellement cylindrique ou annulaire, dans lequel au moins un faisceau lumineux généré par un dispositif laser (2), élargi en bande lumineuse linéaire (3, 3a, 3b, 3c, 3c1, 3c2, 3c3) est projeté sur au moins une zone de la surface du corps solide (1, 1a) qui est déplacé sur un rail (9) en passant devant le dispositif laser (2), et la lumière (RL) réfléchie par la surface du corps solide (1, 1a) est focalisée dans un dispositif d'imagerie (5) associé au dispositif laser (2) et dont l'axe optique (A-A) se trouve sous un angle de triangulation fixe (φ) par rapport à la direction de projection (O-O) du dispositif laser (2) et qui est disposé à une distance de base fixe (B) par rapport au dispositif laser (2), ladite lumière étant saisie à une fréquence (f) élevée par rapport à une vitesse de déplacement (v) du corps solide (1, 1a), au moyen d'un élément de réception de lumière planiforme (6), suite à quoi, à partir de signaux délivrés par l'élément de réception de lumière (6), en fonction de l'angle de triangulation (φ) et de la distance de base (B), dans un dispositif de traitement de données, par des relations trigonométriques et en combinaison avec des valeurs de correction (Kv) déterminées selon la vitesse de déplacement (V) du corps solide (1, 1a), les valeurs mesurées (z$_B$) du profil (P) sont obtenues et stockées dans le dispositif de traitement de données sous forme de profilogramme (PG), dans lequel plusieurs profilogrammes partiels (PG$_a$, PG$_b$, PG$_c$) sont déterminés qui sont mis en relation avec une grandeur de base géométrique, invariable à long terme et fixe, de la roue de véhicule sur rails (1a), et à partir de ceux-ci, un profilogramme global (GPG) est obtenu,
**caractérisé en ce que** les valeurs mesurées (z$_B$) du profil (P) sont obtenues par une combinaison supplémentaire avec des valeurs de correction (Ko) déterminées selon la zone de la surface du corps solide (1, 1a) et qui sont des facteurs et/ou des opérandes vectoriels, déterminés en fonction d'un rayon (R) du corps solide (1, 1a), dans lequel pour la saisie des profilogrammes partiels (PG$_a$, PG$_b$, PG$_c$) une valeur mesurée (Z$_k$) est utilisée qui est un maximum parmi au moins trois valeurs mesurées (z$_1$, z$_2$, z$_3$) situées sur un arc de cercle de rayon (R), correspondant respectivement à une longueur mesurée de la bande lumineuse linéaire (3c), dans lequel les valeurs mesurées (z$_1$, z$_2$, z$_3$) sont déterminées sur l'arc de cercle, **en ce que** respectivement

a) en même temps, au moins trois faisceaux lumineux respectivement élargis en bande lumineuse linéaire (3c1, 3c2, 3c3) sont projetés à des distances respectivement prédéfinies (N1, N2) sur les zones de la surface du corps solide (1, 1a), ou

b) un seul faisceau lumineux élargi en bande lumineuse linéaire (3c) est projeté à des intervalles de temps prédéfinis ($\Delta t$) à au moins trois instants ($t_1$, $t_2$, $t_3$) sur la surface du corps solide (1, 1a).

2. Procédé selon la revendication 1, **caractérisé en ce que** la roue de véhicule sur rails (1a) exécute un mouvement rotatif qui se déroule à une vitesse angulaire constante ($\omega$) qui est inférieure à 15 s$^{-1}$, de préférence inférieure à 6 s$^{-1}$.

3. Procédé selon la revendication 1 ou 2, **caractérisé en ce que** les valeurs de correction (Kv) déterminées selon la vitesse de déplacement (v, $\omega$) du corps solide (1, 1a) sont des facteurs et/ou opérandes vectoriels, proportionnels à la vitesse de déplacement (v, $\omega$).

4. Procédé selon l'une quelconque des revendications 1 à 3, **caractérisé en ce que** pour la détermination des valeurs de correction (Kv) déterminées selon la vitesse de déplacement (v, $\omega$), une combinaison corrélative de la vitesse de déplacement (v, $\omega$) est effectuée à la fréquence (f) de la saisie de la lumière réfléchie (RL).

5. Procédé selon l'une quelconque des revendications 1 à 4, **caractérisé en ce que** plusieurs profilogrammes (PG) sont déterminés en tant que profilogrammes partiels (PG$_a$, PG$_b$, PG$_c$) en utilisant au moins trois dispositifs laser (2) projetant des bandes lumineuses (3, 3a, 3b, 3c, 3c1, 3c2, 3c3) dans des zones situées sur des côtés différents de la surface du corps solide (1, 1a), et des dispositifs d'imagerie (5) associés à ceux-ci, les profilogrammes partiels (PG$_a$, PG$_b$, PG$_c$) sont stockés dans l'ordinateur et un profilogramme global (GPG) est obtenu à partir de ceux-ci.

6. Procédé selon l'une quelconque des revendications 1 à 5, **caractérisé en ce que** le profilogramme (PG), les profilogrammes partiels (PG$_a$, PG$_b$, PG$_c$) et/ou le profilogramme global (GPG) sont comparés respectivement avec un ou plusieurs profilogrammes de référence (BP1, BP2) et les écarts respectifs ($\Delta$PG) par rapport au profilogramme de référence respectif (BP1, BP2) sont constatés.

7. Procédé selon l'une quelconque des revendications 1 à 6, **caractérisé en ce que** le profilogramme (PG), les profilogrammes partiels (PG$_a$, PG$_b$, PG$_c$) et/ou le profilogramme global (GPG), le profilogrammes de référence respectif (BP1, BP2) et/ou les écarts respectifs ($\Delta$PG) sont mis en relation avec une grandeur de base géométrique, invariable à long terme et fixe, notamment un diamètre intérieur de jante sans usure (2*R).

8. Procédé selon la revendication 7, **caractérisé en ce que** la grandeur de base est déterminée à partir d'au moins trois valeurs mesurées ($z_1$, $z_2$, $z_3$) qui sont déterminées par des mesures dynamiques sans contact qui sont effectuées de la même façon que les valeurs mesurées ($z_1$, $z_2$, $z_3$) pour la saisie des profilogrammes (PG) ou pour la saisie des profilogrammes partiels (PG$_a$, PG$_b$, PG$_c$).

9. Procédé selon la revendication 7 ou 8, **caractérisé en ce que** la grandeur de base est un rayon (R) du corps à symétrie de révolution qui est déterminé à partir du système d'équations suivant :

$$R^2 = x_1{}^2 + z_1{}^2 \qquad (1)$$

$$R^2 = x_2{}^2 + z_2{}^2 \qquad (2)$$

$$R^2 = x_3{}^2 + z_3{}^2 \qquad (3)$$

$$x_1 - x_2 = k * (x_2 - x_3) \qquad (4),$$

dans lequel $z_1$, $z_2$, $z_3$ sont trois valeurs mesurées, situées sur un arc de cercle de rayon (R), respectivement déterminées de façon unidirectionnelle, correspondant à l'ordonnée (z) d'un système de coordonnées cartésien, de la longueur de la bande lumineuse linéaire (3, 3a, 3b, 3c, 3c1, 3c2, 3c3) qui correspondent respectivement à la demi-longueur d'une corde ($sl_1$, $sl_2$, $sl_3$) à travers l'arc de cercle, $x_1$, $x_2$, $x_3$ sont les valeurs d'abscisse (x) appartenant respectivement à ces valeurs mesurées, et k est un facteur correspondant à des intervalles de temps prédéfinis ($\Delta t$) ou à des distances (n1, N2) des zones de la surface du corps solide (1, 1a).

**10.** Procédé selon l'une quelconque des revendications 1 à 9, **caractérisé en ce que** le profilogramme (PG), les profilogrammes partiels ($PG_a$, $PG_b$, $PG_c$), le profilogramme global (GPG), le profilogramme de référence respectif (BP1, BP2) et/ou les écarts respectifs ($\Delta PG$) sont visualisés sur un dispositif d'affichage, comme un écran.

**11.** Procédé selon l'une quelconque des revendications 1 à 10, **caractérisé en ce que** comme élément de réception de lumière (6), un dispositif fournissant des signaux numérisés, comme une caméra CCD commandé par déclenchement, est mis en oeuvre.

**12.** Procédé selon l'une quelconque des revendications 1 à 11, **caractérisé en ce que** comme élément de réception de lumière (6) un détecteur de position ("position sensitive device"), comme un réseau de photodiodes, est mis en oeuvre.

**13.** Procédé selon l'une quelconque des revendications 1 à 12, **caractérisé en ce que** la bande lumineuse (3, 3a, 3b, 3c, 3c1, 3c2, 3c3) présente une largeur (b) dans la plage de 0,3 mm à 6,5 mm, en particulier dans la plage de 0,8 mm à 2,2 mm.

**14.** Procédé selon l'une quelconque des revendications 1 à 13, **caractérisé en ce que** la bande lumineuse (3, 3a, 3b, 3c, 3c1, 3c2, 3c3) présente une longueur (LB) dans la plage de 50 nm à 750 nm, en particulier dans la plage de 200 nm à 400 nm.

**15.** Procédé selon l'une quelconque des revendications 1 à 14, **caractérisé en ce que** l'angle de triangulation ($\varphi$) présente des valeurs dans la plage de 15° à 40°, en particulier dans la plage de 20° à 30°.

**16.** Procédé selon l'une quelconque des revendications 1 à 15, **caractérisé en ce que** la fréquence (f) à laquelle la lumière réfléchie (RL) par la surface du corps solide (1, 1a) est saisie au moyen de l'élément de réception de lumière (6), se trouve dans la plage de 25 Hz à 100 kHz, de préférence dans la plage de 1 kHz à 10 kHz.

**17.** Procédé selon l'une quelconque des revendications 1 à 16, **caractérisé en ce qu'**une vitesse de déplacement en translation (v) du corps solide est inférieure à 3,5 m/s, de préférence inférieure à 1,5 m/s.

**18.** Procédé selon l'une quelconque des revendications 1 à 17, **caractérisé en ce qu'**une distance de travail moyenne (L) du dispositif laser (2) et/ou du dispositif d'imagerie (5) par rapport à la zone de la surface du corps solide (1, 1a) sur laquelle la bande lumineuse (3, 3a, 3b, 3c, 3c1, 3c2, 3c3) est projetée, se situe dans la plage de 20 mm à 650 mm, en particulier dans la plage de 150 mm à 350 mm.

**19.** Procédé selon l'une quelconque des revendications 1 à 18, **caractérisé en ce que** la distance de base (B) entre le dispositif d'imagerie (5), en particulier le point central d'une lentille de focalisation (4) du dispositif d'imagerie (5) et l'axe optique (O-O) du dispositif laser se situe dans la plage de 30 mm à 450 mm, en particulier dans la plage de 60 mm à 270 mm.

**20.** Procédé selon l'une quelconque des revendications 1 à 19, **caractérisé en ce que** pour le profilogramme (PG), les profilogrammes partiels ($PG_a$, $PG_b$, $PG_c$), le profilogramme global (GPG), le profilogramme de référence respectif (BP1, BP2) et/ou les écarts respectifs ($\Delta PG$), une résolution ($dz_A$) de moins de 2,0 mm, en particulier de moins de 0,5 mm, est supposée.

Fig.1

Fig.2

Fig.3

Fig.4

EP 1 606 577 B1

Fig. 5

EP 1 606 577 B1

Fig.6

EP 1 606 577 B1

Fig.7

EP 1 606 577 B1

EP 1 606 577 B1

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5636026 A

**In der Beschreibung aufgeführte Nicht-Patentliteratur**

- Bildverarbeitung und optische Meßtechnik. Monografie von Bernd Breuckmann. 1993